(19) Europäisches Patentamt
European Patent Office
Office européen des brevets

(11) EP 1 972 662 A2

(12) **EUROPEAN PATENT APPLICATION**

(43) Date of publication:
**24.09.2008 Bulletin 2008/39**

(51) Int Cl.:
***C09B 67/18*** *(2006.01)* ***C09D 5/00*** *(2006.01)*
***C09B 67/46*** *(2006.01)*

(21) Application number: **08005121.2**

(22) Date of filing: **19.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **20.03.2007 JP 2007073614**

(71) Applicant: **FUJIFILM Corporation**
**Minato-ku**
**Tokyo 106-8620 (JP)**

(72) Inventors:
- **Kyota, Hirokazu**
**Kanagawa 258-8577 (JP)**
- **Maeta, Hideki**
**Kanagawa 258-8577 (JP)**

(74) Representative: **HOFFMANN EITLE**
**Patent- und Rechtsanwälte**
**Arabellastrasse 4**
**81925 München (DE)**

(54) **Organic pigment fine particles and an organic pigment fine particle dispersion, method of producing an organic pigment fine particle dispersion**

(57) Organic pigment fine particles, wherein at least one compound selected from a specified aromatic compound and a specified amine compound is included in the fine particles.

EP 1 972 662 A2

## Description

### FIELD OF THE INVENTION

The present invention relates to organic pigment fine particles and an organic pigment fine particle dispersion, and to a method of producing an organic pigment fine particle dispersion. More specifically, the present invention relates to organic pigment fine particles having both minuteness and lightfastness and a dispersion of the organic pigment fine particles, and further to a method of producing an organic pigment fine particle dispersion.

### BACKGROUND OF THE INVENTION

Pigments generally exhibit vivid color tone and high coloring power, and they are widely used in many fields. Examples of use applications in which pigments are used include paints, printing inks, electrophotographic toners, ink-jet inks, and color filters. General properties, classification by use, and other aspects of pigments are described in, for example, "Dispersion Stabilization of Pigment and Surface Treatment Technique/Evaluation", Technical Information Institute Co., Ltd., 2001, pp. 123-224. In particular, examples of pigments that require high performance, and that are of particular importance in practical use, are ink-jet ink pigments, and color filter pigments.

In recent years, reduction in color filter thickness has been strongly required for achieving an increase in pixel count of apparatus associated with imaging, such as liquid crystal displays, CCD sensors or digital cameras. To reduction in color filter thickness, it is essential that finer pigments be used in color filters. In addition, development of pigment fine particles with uniformity and minuteness is required for ensuring higher contrast in color filters. In other words, development of pigment fine particles with minuteness, uniformity and stability holds the key to achieving high performance of apparatus associated with imaging.

On the other hand, dyes have been so far used as coloring materials of ink-jet inks. However, dyes are inferior in water resistance and light stability. So, pigments have come to be used for improvements in ink-jet ink properties. And it is being tried to apply ink-jet technology to not only a printing purpose but also production of a wide variety of precision members. For example, ink-jet technology is expected as a technology for production of precision members, most notably color filters, which substitutes for traditional technologies including lithography and allows enhancement of design flexibility and significant increase in productivity. However, neither pigment fine particles suitable for such a technology and fully adaptable to those requirements nor ink-jet inks containing such pigment fine particles are present yet.

From this background, pigments are required to be fined down so as to have particle diameters on the order of, for example, several tens of nanometers, and that to undergo such particle-diameter control that the distribution of their particle diameters approaches a monodisperse distribution. However, it is difficult to obtain such pigments by use of a general breakdown method (crushing method). This is because such a method requires great amounts of time and energy for crushing down pigments to nanometer-size particles, so it has low productivity, and besides, it limits pigments usable therein.

Contrary to this, a build-up method in which particles are made to grow in a gas phase or a liquid phase has been studied (see "Experimental Chemical Lecture, 4th Edition" edited by the Chemical Society of Japan (Maruzen Co., Ltd.), vol. 12, pp. 411-488, etc.). For example, methods of forming organic compound particles in a micro-chemical process are disclosed (see European Patent Publication No. 1516896 A1, JP-A-2005-307154, "JP-A" means unexamined published Japanese patent application), and those methods make it possible to obtain fine particles with efficiency.

However, it is commonly known that organic pigments lower their lightfastness as they become finer (see, for example, Yuki Ganryo Handbook (Handbook of Organic Pigments), edited by Color Office, page 45,). Although it allows formation of pigment fine particles of extremely minute sizes meeting the high performance requirement for particle sizes, the build-up method still has an unsolved problem that degradation in light stability becomes so more pronounced.

As to lightfastness improvement, there are reports that some measure of effect can be attained by mixing of discoloration inhibitors (see JP-A-6-166827 and JP-A-9-52975). Specifically, bulk pigment is crushed down in the presence of a hydroxylamine compound, a hindered amine compound (HALS) or the like, or such a compound is added after bulk pigment is crushed down. However, such reports cover coarse particles or pigment particles insufficient in degree of minuteness which are obtained by the breakdown method. Accordingly, technologies capable of satisfying both requirements, i.e., sufficient minuteness and high fastness, are absent yet, and room for development of such technologies is still left.

### SUMMARY OF THE INVENTION

The present invention resides in organic pigment fine particles, wherein at least one compound selected from an aromatic compound represented by the following formula (1) and an amine compound represented by the following formula (2) is included in the fine particles.

Formula (1)

[In the above formula, $R^1$ represents a hydrogen atom or an alkyl group. $X^1$ to $X^5$ each represent a hydrogen atom or an arbitrary substituent independently. Herein, however, the case where both $X^1$ and $X^2$ are hydrogen atoms is excluded. $R^1$ and any of $X^1$ to $X^5$ may combine with each other to from a ring.]

Formula (2)

[In the above formula, $Y^1$ represents a hydrogen atom, an alkyl group, a hydroxyl group, an alkoxy group, an acyloxy group or an oxygen atom. $Z^1$ and $Z^2$ each represent an alkyl group independently. Any two of $Y^1$, $Z^1$ and $Z^2$ may combine with each other to form a ring.]

Further, the present invention resides in a dispersion, comprising the above organic pigment fine particles

Further, the present invention resides in a method of producing an organic pigment fine particle dispersion, wherein, when organic pigment fine particles are made to precipitate by mixing an organic pigment solution and an aqueous medium, at least one compound selected from an aromatic compound represented by the following formula (1) and an amine compound represented by the following formula (2) is mixed into at least one of the organic pigment solution and the aqueous medium to thereby precipitate organic pigment fine particles and prepare the organic pigment fine particle dispersion.

Formula (1)

[In the above formula, $R^1$ represents a hydrogen atom or an alkyl group. $X^1$ to $X^5$ each represent a hydrogen atom or an arbitrary substituent independently. Herein, however, the case where both $X^1$ and $X^2$ are hydrogen atoms is excluded. $R^1$ and any of $X^1$ to $X^5$ may combine with each other to from a ring.]

Formula (2)

[In the above formula, $Y^1$ represents a hydrogen atom, an alkyl group, a hydroxyl group, an alkoxy group, an acyloxy group or an oxygen atom. $Z^1$ and $Z^2$ each represent an alkyl group independently. Any two of $Y^1$, $Z^1$ and $Z^2$ may

combine with each other to form a ring.]

Other and further features and advantages of the invention will appear more fully from the following description, with taken in connection with the accompanying drawings.

## BRIEF DESCRIPTION OF THE DRAWINGS

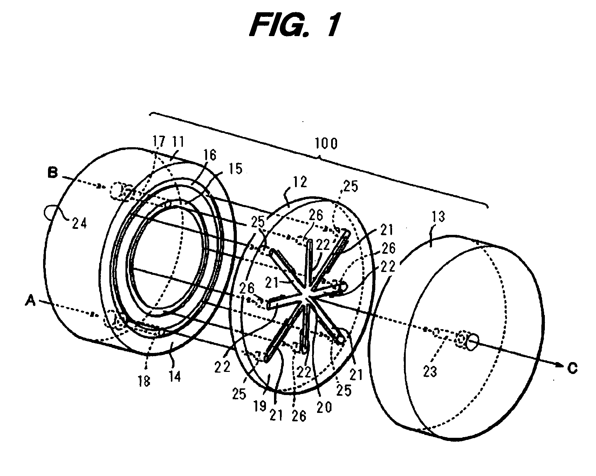

Fig. 1 is an exploded perspective view showing schematically an example of a three-dimensional microreactor-apparatus.

## DETAILED DESCRIPTION OF THE INVENTION

According to the present invention, there is provided the following means:

[1] Organic pigment fine particles, wherein at least one compound selected from an aromatic compound represented by the following formula (1) and an amine compound represented by the following formula (2) is included in the fine particles.

Formula (1)

[In the above formula, $R^1$ represents a hydrogen atom or an alkyl group. $X^1$ to $X^5$ each represent a hydrogen atom or an arbitrary substituent independently. Herein, however, the case where both $X^1$ and $X^2$ are hydrogen atoms is excluded. $R^1$ and any of $X^1$ to $X^5$ may combine with each other to from a ring.]

Formula (2)

[In the above formula, $Y^1$ represents a hydrogen atom, an alkyl group, a hydroxyl group, an alkoxy group, an acyloxy group or an oxygen atom. $Z^1$ and $Z^2$ each represent an alkyl group independently. Any two of $Y^1$, $Z^1$ and $Z^2$ may combine with each other to form a ring.]

[2] The organic pigment fine particles as described in [1], wherein at least one of the amine compound represented by the formula (2) is included in the fine particles.

[3] The organic pigment fine particles as described in [1] or [2], wherein the $Y^1$ in the amine compound represented by the formula (2) is a hydrogen atom, an oxygen atom or a hydroxyl group.

[4] The organic pigment fine particles as described in any one of [1] to [3], wherein the amine compound represented by the formula (2) is a compound represented by the following formula (3).

Formula (3)

[In the above formula, $Y^2$ represents a hydrogen atom, a hydroxyl group or an oxygen atom. $R^2$ and $R^3$ each represent a hydrogen atom or a substituent independently. $R^2$ and $R^3$ may combine with each other to form a ring.]

[5] The organic pigment fine particles as described in any one of [1] to [4], wherein at least one compound selected from the aromatic compound represented by the formula (1) and the amine compound represented by the formula (2) is incorporated in an amount of 0.1 parts by mass or more into 100 parts by mass of the organic pigment fine particles.

[6] The organic pigment fine particles as described in any one of [1] to [5], having a volume average particle diameter (Mv) of 80 nm or less.

[7] The organic pigment fine particles as described in any one of [1] to [6], having a volume average particle diameter (Mv) of 50 nm or less.

[8] The organic pigment fine particles as described in any one of [1] to [7], havig a volume average particle diameter (Mv)-to-number average particle diameter (Mn) ratio (Mv/Mn) of 1.8 or less.

[9] The organic pigment fine particles as described in any one of [1] to [8], being produced by a build-up method.

[10] A dispersion, comprising the organic pigment fine particles as described in any one of [1] to [9].

[11] A method of producing an organic pigment fine particle dispersion, comprising the step of: when organic pigment fine particles are made to precipitate by mixing an organic pigment solution and an aqueous medium,
mixing at least one compound selected from an aromatic compound represented by the following formula (1) and an amine compound represented by the following formula (2) into at least one of the organic pigment solution and the aqueous medium to thereby precipitate organic pigment fine particles and prepare the organic pigment fine particle dispersion.

Formula (1)

[In the above formula, $R^1$ represents a hydrogen atom or an alkyl group. $X^1$ to $X^5$ each represent a hydrogen atom or an arbitrary substituent independently. Herein, however, the case where both $X^1$ and $X^2$ are hydrogen atoms is excluded. $R^1$ and any of $X^1$ to $X^5$ may combine with each other to from a ring.]

Formula (2)

[In the above formula, $Y^1$ represents a hydrogen atom, an alkyl group, a hydroxyl group, an alkoxy group, an acyloxy group or an oxygen atom. $Z^1$ and $Z^2$ each represent an alkyl group independently. Any two of $Y^1$, $Z^1$ and $Z^2$ may combine with each other to form a ring.]

[12] The method of producing an organic pigment fine particle dispersion as described in [11], wherein at least one of the amine compound represented by the formula (2) is mixed into at least one of the organic pigment solution and the aqueous medium.
[13] The method of producing an organic pigment fine particle dispersion as described in [11] or [12], wherein the $Y^1$ in the amine compound represented by the formula (2) is a hydrogen atom, an oxygen atom or a hydroxyl group.
[14] The method of producing an organic pigment fine particle dispersion as described in any one of [11] to [13], wherein the amine compound represented by the formula (2) is a compound represented by the following formula (3).

Formula (3)

[In the above formula, $Y^2$ represents a hydrogen atom, a hydroxyl group or an oxygen atom. $R^2$ and $R^3$ each represent a hydrogen atom or a substituent independently. Alternatively, $R^2$ and $R^3$ may combine with each other to form a ring.]
[15] The method of producing an organic pigment fine particle dispersion as described in any one of [11] to [14], further incorporating a dispersing agent into at least one of the organic pigment solution and the aqueous medium.
[16] The method of producing an organic pigment fine particle dispersion as described in any one of [11] to [15], wherein the organic pigment solution is prepared by dissolving an organic pigment by use of an alkali.
[17] The method of producing an organic pigment fine particle dispersion as described in any one of [11] to [16], wherein at least one compound selected from the aromatic compound represented by the formula (1) and the amine compounds represented by the formula (2) is mixed into the organic pigment solution.
[18] The method of producing an organic pigment fine particle dispersion as described in any one of [11] to [17], wherein the precipitation of the organic pigment fine particles is performed with a microreactor-apparatus.
[19] The method of producing an organic pigment fine particle dispersion as described in [18], wherein the microreactor-apparatus has flow paths whose equivalent diameters are each adjusted to 1 mm or less.
[20] The method of producing an organic pigment fine particle dispersion as described in any one of [11] to [19], wherein the precipitation of the organic pigment fine particles is performed in a laminar flow process.
[21] The method of producing an organic pigment fine particle dispersion according to any one of [11] to [20], further comprising the steps of:

dividing at least one of liquid flows of the organic pigment solution and the aqueous medium, into plural divided flows, and
joining at least one of the plural divided flows with the other liquid flow in the manner that central axes of said flows intersect at one point in a junction region so as to mix the organic pigment solution and the aqueous medium.

At first, the present organic pigment fine particles in which a specified compound is included and a dispersion thereof are described.
The pigment fine particles of the present invention are those having inclusions of at least one compound selected from aromatic compounds represented by the following formula (1) or amine compounds represented by the following formula (2). As the compounds included, the compounds represented by formula (2) are preferable because they are greater in effect of preventing discoloration.
The compound represented by formula (1) will be described below.

Formula (1)

In the above formula, $R^1$ represents a hydrogen atom or an alkyl group. When $R^1$ is an alkyl group, the alkyl group may have any of linear, branched and cyclic forms, and the number of carbon atoms contained therein is preferably from 1 to 20, more preferably from 1 to 12. In addition, when $R^1$ is alkyl group, the alkyl group may have a substituent, and examples of such a substituent include a halogen atom (a fluorine, chlorine, bromine or iodine atom), an alkenyl group, an alkynyl group, an aryl group, a hydroxyl group, an alkoxy group (including a group having a repetition of the ethylene oxide unit), an aryloxy group, a heterocyclic group, an acyl group, an alkoxycarbonyl group, an aryloxycarbonyl group, a carbamoyl group, a carboxyl group or a salt thereof, a cyano group, an amino group, a quaternary ammonium group and a nitro group.

$X^1$ to $X^5$ each represent a hydrogen atom or an arbitrary substituent independently. Herein, however, the case where both $X^1$ and $X^2$ are hydrogen atoms is excluded. $R^1$ and any of $X^1$ to $X^5$ may combine with each other to from a ring.

Examples of a substituent represented by each of $X^1$ to $X^5$ include a halogen atom, an alkyl group, an alkenyl group, an alkynyl group, an aryl group, a heterocyclyl group, an acyl group, an alkoxycarbonyl group, an aryloxycarbonyl group, a carbamoyl group, a carboxyl group or a salt thereof, a sulfonylcarbamoyl group, an acylcarbamoyl group, a cyano group, a hydroxyl group, an alkoxy group, an aryloxy group, a heterocyclyloxy group, an acyloxy group, an (alkoxy or aryloxy)carbonyloxy group, a carbamoyloxy group, a sulfonyloxy group, an amino group, an acylamino group, a sulfonamido group, an imido group, an (alkoxy or aryloxy)carbonylamino group, a sulfamoylamino group, a semicarbazido group, a thiosemicarbazido group, a hydrazino group, a quaternary ammonio group, an oxamoylamino group, an (alkyl or aryl)sulfonylureido group, an acylureido group, an acylsulfamoylamino group, a nitro group, an (alkyl or aryl)sulfonyl group, an (alkyl or aryl)sulfinyl group, a sulfo group or a salt thereof, a sulfamoyl group, an acylsulfamoyl group, a sulfonylsulfamoyl group or a salt thereof, and a group containing a phosphoric acid amide or phosphoric acid ester structure. Of these groups, an alkyl group, a halogen atom, an acyl group, a carbamoyl group, a hydroxyl group, an alkoxy group and an alkoxycarbonyl group are preferred.

Examples of the compound preferable as the compound represented by formula (1) will be illustrated below, but the invention should not be construed as being restricted by these examples. Additionally, Pr represents an propyl group, and Bu represents a butyl group.

1-1

1-2

1-3

1-4 1-5 1-6 1-7

1-8 1-9

The compound represented by formula (2) will be described below.

Formula (2)

$$Z^1-N(Y^1)-Z^2$$

In the above formula, $Y^1$ represents a hydrogen atom, an alkyl group, a hydroxyl group, an alkoxy group, an acyloxy group or an oxygen atom (Herein, the case where $Y^1$ represents an oxygen atom means that the compound represented by formula (2) has an "N-O radical".). It is preferred that $Y^1$ is a hydrogen atom, a hydroxyl group or an oxygen atom. When $Y^1$ is any of an alkyl group, an alkoxy group and acyloxy group, the number of carbon atoms in $Y^1$ is preferably from 1 to 30, more preferably from 1 to 12.

$Z^1$ and $Z^2$ each represent an alkyl group independently. The alkyl group in this case may have any of linear, branched and cyclic forms, and the number of carbon atoms contained therein is preferably from 1 to 30, more preferably from 1 to 12. Any two of $Y^1$, $Z^1$ and $Z^2$ may combine with each other to form a ring. Additionally, when $Z^1$ or $Z^2$ is an alkyl group, the alkyl group may have a substituent. Examples of such a substituent include a halogen atom (a fluorine, chlorine, bromine or iodine atom), an alkenyl group, an alkynyl group, an aryl group, a hydroxyl group, an alkoxy group (including a group having a repetition of ethylene oxide units), an aryloxy group, a heterocyclyl group, an acyl group, an alkoxycarbonyl group, an aryloxycarbonyl group, a carbamoyl group, an acylamino group, a carboxyl group or a salt thereof, a cyano group, an amino group, a quaternary ammonium group and a nitro group.

Of the compound represented by formula (2), those represented by the following formula (3) are more preferable.

Formula (3)

In the above formula, $Y^2$ represents a hydrogen atom, a hydroxyl group or an oxygen atom, particularly preferably an oxygen atom. $R^2$ and $R^3$ each represent a hydrogen atom or a substituent independently. Alternatively, $R^2$ and $R^3$ may combine with each other to form a ring. Examples of substituents represented by $R^2$ and $R^3$ respectively include a halogen atom (a fluorine, chlorine, bromine or iodine atom), an alkenyl group, an alkynyl group, an aryl group, a hydroxyl group, an alkoxy group (including a group having a repetition of ethylene oxide units), an aryloxy group, a heterocyclyl group, an acyl group, an alkoxycarbonyl group, an aryloxycarbonyl group, a carbamoyl group, a carboxyl group or a salt thereof, a cyano group, an amino group, a quaternary ammonium group and a nitro group. Cases where one of $R^2$ and $R^3$ is a hydrogen atom and the other is any of an alkoxy group (such as a methoxy group or a phenoxy group), an acylamino group (such as an acetylamino group or a benzoylamino group), an acyloxy group (such as an acetyloxy group or a benzoyloxy group), a hydroxycarbonyl group (which may be dissociated to form a salt) are particularly preferable.

Examples of the preferable compound as the compound represented by formula (2) are illustrated below, but the present invention should not be construed as being restricted by these examples. Additionally, Et presents an ethyl group and Bu presents a butyl group.

2-1

2-2

2-3

2-4

2-5

2-6

The amount of the compound represented by formula (1) or (2) contained by the organic pigment fine particles has no particular limitation, but it is preferably from 0.1 to 100 parts by mass, more preferably from 1 to 50 parts by mass per 100 parts by mass of the organic pigment (exclusive of the mass of the compound represented by formula (1) or (2)).

The compounds represented by formulae (1) and (2) contribute mainly to improvements in fastness, notably lightfastness, of organic pigment fine particles. The wording "included in" as used in the present invention means a condition that at least a part of compound represented by formula (1) or (2) is incorporated into precipitated organic fine particles. Therein, the compound may form a crystal lattice in concert with pigment, or it may be trapped in cracks of pigment. By being included in pigment particles of nanometer sizes in the foregoing condition, the compound represented by formula (1) or (2) can exert such effects as not to be achieved by mere adhesion of the compound to pigment fine particles or by concomitance in a loosely contact condition,. For instance, great effect on prevention of discoloration, which cannot be expected from mere concomitance or adhesion, can be produced. In addition, even when the solvent of the dispersion is replaced with a given solvent (e.g., in the case of substituting an organic compound solvent for an aqueous medium as the main solvent of the dispersion obtained), the intended effects can be retained because the compound represented by formula (1) or (2) is included in pigment fine particles.

The compound represented by formula (1) or (2) enclosed in the organic pigment fine particles of the present invention does not thoroughly run out even under operations including washing with water, an organic solvent or the like and solvent replacement. By taking advantage of such a phenomenon, it is possible to check on inclusion of the compound. For instance, the organic pigment fine particles of the present invention are filtered off by means of an ultrafiltration device and fully washed with a solvent in which the compound is soluble (e.g., water when the compound is soluble in water), and then the quantity of the compound contained in the resulting filtrate is determined, or the pigment after washing is dissolved again in an alkali and the quantity of the compound contained in the alkali solution is determined. From the quantity thus determined, the quantity of the compound included can be known.

The organic pigment usable for the organic pigment fine particles of the present invention is not limited in hue and structure thereof. Specifically, examples thereof include perylene-compound pigments, perynone-compound pigments, quinacridone-compound pigments, quinacridonequinone-compound pigments, anthraquinone-compound pigments, anthanthorone-compound pigments, benzimidazolone-compound pigments, condensed disazo-compound pigments, disazo-compound pigments, azo-compound pigments, indanthrone-compound pigments, indanthrene-compound pigments, quinophthalone-compound pigments, quinoxalinedione-compound pigments, metal-complex azo-compound pigments, phthalocyanine-compound pigments, triarylcarbonium-compound pigments, dioxazine-compound pigments, aminoanthraquinone-compound pigments, diketopyrrolopyrrole-compound pigments, naphthol AS compound pigments, thioindigo-compound pigments, isoindoline-compound pigments, isoindolinone-compound pigments, pyranthrone-compound pigments, isoviolanthrone-compound pigments, and mixtures of any two or more thereof.

More specifically, examples of the organic pigment include perylene-compound pigments, such as C.I. Pigment Red 179, C.I. Pigment Red 190, C.I. Pigment Red 224, C.I. Pigment Violet 29, or the like; perynone-compound pigments, such as C.I. Pigment Orange 43, C.I. Pigment Red 194 or the like; quinacridone-compound pigments, such as C.I. Pigment Violet 19, C.I. Pigment Violet 42, C.I. Pigment Red 122, C.I. Pigment Red 192, C.I. Pigment Red 202, C.I. Pigment Red 207, C.I. Pigment Red 209 or the like; quinacridonequinone-compound pigments, such as C.I. Pigment Red 206, C.I. Pigment Orange 48, C.I. Pigment Orange 49, or the like; anthraquinone-compound pigments, such as C.I. Pigment Yellow 147 or the like; anthanthrone-compound pigments, such as C.I. Pigment Red 168 or the like; benzimidazolone-compound pigments, such as C.I. Pigment Brown 25, C.I. Pigment Violet 32, C.I. Pigment Yellow 180, C.I. Pigment Yellow 181, C.I. Pigment Orange 36, C.I. Pigment Orange 62, C.I. Pigment Red 185, or the like; condensed disazo-compound pigments, such as C.I. Pigment Yellow 93, C.I. Pigment Yellow 94, C.I. Pigment Yellow 95, C.I. Pigment Yellow 128, C.I. Pigment Yellow 166, C.I. Pigment Orange 34, C.I. Pigment Orange 13, C.I. Pigment Orange 31, C.I. Pigment Red 144, C.I. Pigment Red 166, C.I. Pigment Red 219, C.I. Pigment Red 220, C.I. Pigment Red 221, C.I. Pigment Red 242, C.I. Pigment Red 248, C.I. Pigment Red 262, C.I. Pigment Brown 23, or the like; disazo-compound pigments, such as C.I. Pigment Yellow 13, C.I. Pigment Yellow 83, C.I. Pigment Yellow 188, or the like; azo-compound pigments, such as C.I. Pigment Red 187, C.I. Pigment Red 170, C.I. Pigment Yellow 74, C.I. Pigment Red 48, C.I.

Pigment Red 53, C.I. Pigment Orange 64, C.I. Pigment Red 247, or the like; indanthrone-compound pigments, such as C.I. Pigment Blue 60, or the like; indanthrene-compound pigments, such as C.I. Pigment Blue 60, or the like; quinophthalone-compound pigments, such as C.I. Pigment Yellow 138, or the like; quinoxalinedione-compound pigments, such as C.I. Pigment Yellow 213, or the like; metal-complex azo-compound pigments, such as C.I. Pigment Yellow 129, C.I. Pigment Yellow 150, or the like; phthalocyanine-compound pigments, such as C.I. Pigment Green 7, C.I. Pigment Green 36, Pigment Green 37, Pigment Blue 16, C.I. Pigment Blue 75, 15 (including 15:1, 15:6 or the like), or the like; triaryl carbonium-compound pigments, such as C.I. Pigment Blue 56, C.I. Pigment Blue 61, or the like; dioxazine-compound pigments, such as C.I. Pigment Violet 23, C.I. Pigment Violet 37, or the like; aminoanthraquinone-compound pigments, such as C.I. Pigment Red 177, or the like; diketopyrrolopyrrole-compound pigments, such as C.I. Pigment Red 254, C.I. Pigment Red 255, C.I. Pigment Red 264, C.I. Pigment Red 272, C.I. Pigment Orange 71, C.I. Pigment Orange 73, or the like; naphthol AS compound pigments, such as C.I. Pigment Red 187, C.I. Pigment Red 170, or the like; thioindigo-compound pigments, such as C.I. Pigment Red 88, or the like; isoindoline-compound pigments, such as C.I. Pigment Yellow 139, C.I. Pigment Orange 66, or the like; isoindolinone-compound pigments, such as C.I. Pigment Yellow 109, C.I. Pigment Yellow 110, C.I. Pigment Orange 61, or the like; pyranthrone-compound pigments, such as C.I. Pigment Orange 40, C.I. Pigment Red 216, or the like; or isoviolanthrone-compound pigments, such as C.I. Pigment Violet 31, or the like.

Among these, anthraquinone-compound pigments, naphthol compound pigments, perylene-compound pigments, quinacridone-compound pigments, diketopyrrolopyrrole-compound pigments, benzimidazolone-compound pigments, metal-complex azo-compound pigments, dioxazine-compound pigments, naphtholone-compound pigments, phthalocyanine-compound pigments, or indanthrone-compound pigments are preferable.

In the present invention, a mixture of two or more organic pigments, a solid solution of organic pigments, or a combination of organic pigments and inorganic pigments may also be used. The organic pigment concentration in an organic pigment solution used for a reprecipitation method or a coprecipitation method is not particularly limited, but it is preferably from 0.5 to 20 % by mass, more preferably from 1.0 to 10 % by mass.

The particle diameter (in the present invention, the particle diameter refers to a diameter of a particle) and monodispersibility of the organic pigment fine particles of the present invention are not particularly limited, but the average particle diameter is preferably nanometer-size (less than 1 μm), and the volume average particle diameter (Mv) measured in the dispersion containing the pigment fine particles by a dynamic light scattering method is more preferably 80 nm or less, furthermore preferably 50 nm or less. As to the monodispersibility, a value (Mv/Mn) obtained by dividing a volume average particle diameter Mv by a number average particle diameter Mn may be expressed as an index. The value Mv/Mn is preferably 1.8 or less, and more preferably 1.5 or less.

The term "dispersion" as used in the present invention refers to a composition prepared by dispersing given fine particles into a medium, and the composition has no particular restriction on its state. So, it is intended to include a liquid composition (dispersion liquid), a paste composition and a solid composition.

In the organic pigment fine particle dispersion of the present invention, the content of organic pigment fine particles, though not particularly limited, is preferably from 0.1 to 50 % by mass, more preferably from 0.5 to 25 % by mass.

The organic pigment fine particles of the present invention may be either [a] pigment fine particles precipitated out of a liquid phase in which the pigment and a compound represented by formula (1) or (2) are present together, or [b] pigment fine particles to which a compound represented by formula (1) or (2) is added after their precipitation. Of these two, [a] pigment fine particles precipitated out of a liquid phase in which the pigment and a compound represented by formula (1) or (2) are present together is preferable because effective inclusion of the compound is more likely to occur therein. In this mode [a], the compound represented by formula (1) or (2), though may be present in any condition, is preferably mixed in advance into at least either an organic pigment solution or an aqueous medium, more preferably mixed in advance into an organic pigment solution.

By drying, the organic pigment fine particle dispersion can be made into the solid matter of organic pigment fine particles. The drying method may be a general method and has no particular limitation. For instance, it is possible to adopt freeze drying, reduced-pressure distillation (evaporator), combination of these methods or the like. The content of organic pigment in a solidified state, though not particularly limited, is preferably from 5 to 90 % by mass, more preferably from 20 to 80 % by mass. The suitable content of the compound represented by formula (1) or (2) in the organic pigment fine particles is within the same range as in the dispersion.

The pigment fine particles of the present invention are preferably formed by a build-up method. In the present invention, the build-up method is defined as a method of forming nanometer-size organic pigment particles from an organic pigment or an organic pigment precursor dissolved in a solvent (molecular dispersion) through chemical reaction without requiring any additional fining operation, such as a crushing operation. Although the build-up method is roughly classified into a vapor-phase method and a liquid-phase method, it is preferable in the present invention that the fine particles are formed according to a liquid-phase method.

The organic pigment fine particles and its dispersion of the present invention is applicable for preferable ink-jet ink. Specifically, the organic pigment dispersion formed by precipitating the organic pigment particles according to

the build-up method as mentioned above is purified and concentrated by centrifugation and/or ultrafiltration. Water-soluble organic solvent with a high boiling point such as glycerins and glycols are added to the resultant organic pigment dispersion. Further, an additive is added for the purpose of achieving satisfactory pH, surface tension, viscosity, preservation, and the like, whereby ink-jet ink can be prepared. In addition, the above-mentioned separation, concentration, adjustment of a liquid physical property, and the like are performed appropriately, to thereby obtain the organic pigment dispersion used for a color filter of high performance.

In the next place, methods of producing organic pigment fine particles incorporating a specific compound and a dispersion thereof are described in more detail.

The producing method of the present invention includes a process of preparing a dispersion by precipitating organic pigment fine particles from a mixture of an organic pigment solution and an aqueous medium, wherein at least one of compounds represented by formula (1) and (2) is mixed in advance into at least either the organic pigment solution or the aqueous medium. In accordance with the producing method of the present invention, the compound is likely to reach a state of being included in the pigment, so that the producing method of the present invention is advantageous as compared with the technique of adding the compound after producing pigment fine particles.

The method of dissolving an organic pigment is not particularly limited, but it is preferred that the organic pigment is dissolved by use of an alkali or acid. It depends on the nature of the pigment whether the organic pigment in interest may be more easily dissolved homogeneously under either alkaline or acidic, to select the conditions in which the organic pigment be dissolved under alkaline or dissolved under acidic. In general, in the case of the pigment having in the molecule thereof a group dissociative under alkaline, the alkaline medium is used, and in the case of the pigment having no group dissociative under alkaline and having in the molecule thereof many nitrogen atoms, to which protons easily adhere, the acidic medium is used. For example, quinacridone-, diketopyrrolopyrrole-, and condensed disazo-compound pigments can be dissolved in the alkaline medium more homogenously, and a phthalocyanine-compound pigment can be dissolved in the acidic medium more homogenously. It is especially preferable to apply the producing method of the present invention to cases where pigment solutions can be prepared by dissolving pigments into alkalis. In the case of using acids for dissolution of pigments, there are restrictions on usable reactors because metallic apparatus susceptible to corrosion is difficult to use under usual conditions.

Examples of a base that can be used in the case that the pigment is dissolved in alkaline medium, include inorganic bases, such as sodium hydroxide, potassium hydroxide, calcium hydroxide, and barium hydroxide; and organic bases, such as trialkylamine, diazabicycloundecene (DBU), and metal alkoxides. Among these, inorganic bases are preferable.

The amount of the base to be used is not particularly limited. In the case of the inorganic base, the amount thereof is preferably from 1.0 to 30 mole equivalents, more preferably from 2.0 to 25 mole equivalents, and further preferably from 3.0 to 20 mole equivalents, to the pigment. In the case of the organic base, the amount thereof is preferably from 1.0 to 100 mole equivalents, more preferably from 5.0 to 100 mole equivalents, and further preferably from 20 to 100 mole equivalents, to the pigment.

Examples of an acid to be used in the case that the pigment is dissolved in the acidic medium, include inorganic acids, such as sulfuric acid, hydrochloric acid, and phosphoric acid; and organic acids, such as acetic acid, trifluoroacetic acid, oxalic acid, methanesulfonic acid, and trifluoromethanesulfonic acid. Among these, the inorganic acids are preferable, and sulfuric acid is especially preferable.

The amount of the acid to be used is not particularly limited. In many cases, the acid is used in a larger or more excessive amount than the base. Regardless the kind of the acid being an inorganic acid or an organic acid, the amount of the acid to be used is preferably from 3 to 500 mole equivalents, more preferably from 10 to 500 mole equivalents, and further preferably from 30 to 200 mole equivalents, to the pigment.

In the present invention, the "aqueous medium" refers to water alone, or a mixed solvent of water and an organic solvent soluble in water. The addition of the organic solvent is preferably used, for example, (i) in the case where only water is not sufficient for uniformly dissolving a pigment and a dispersing agent, (ii) the case where only water is not sufficient for obtaining viscosity required for the flow through a flow path, and the like. In the case of alkaline, the organic solvent is preferably an amide-compound solvent or a sulfur-containing compound solvent, more preferably the sulfur-containing-compound solvent and particularly preferably dimethylsulfoxide (DMSO). In the case of the acidic, the organic solvent is preferably a carboxylic acid-compound solvent, a sulfur-containing compound solvent or a sulfonic acid-compound solvent, more preferably a sulfonic acid-compound solvent and particularly preferably methanesulfonic acid.

Additionally, an inorganic compound salt and a dispersing agent as described below may be dissolved into an aqueous medium as required.

At this time, it is preferable that a solution containing an organic pigment in a homogeneously dissolved state and an aqueous medium are fed into rectifiable flow paths, respectively, in the same longitudinal direction and both liquids are brought into contact with each other while passing through the channel, and thereby fine particles of the organic pigment are precipitated. When a suspension is introduced into the channel, the size of the particles therein

may becomes large or pigment fine-particles having a wide particle size distribution may be generated. This results, as the case may be, to be apt to block the channel.

The wording "homogeneously dissolved" means a solution in which turbidity (muddiness) is hardly observed when the solution is observed under visible light. In the present invention, a solution obtained by filtration through a micro-filter having pores of 1 μm or less in diameter, or a solution which does not contain any substance remaining after the solution is filtrated through a filter having pores of 1 μm or less in diameter, is defined as a homogeneously dissolved solution (or a homogeneous solution).

In the case of precipitating pigment fine particles, the reaction temperature is preferably within such a range that the solvent is not solidified or vaporized, and it is preferably from -20 to 90°C, more preferably from 0 to 50°C, and particularly preferably from 5 to 15°C.

In the producing method of the present invention, it is preferable that organic pigment fine particles are precipitated according to a coprecipitation method. The term "coprecipitation method" as used in the present invention is defined as a method of performing a precipitation operation of pigment fine particles by bringing a solution prepared by dissolving an organic pigment into a good solvent (molecular dispersion) into contact with a poor solvent (e.g., an aqueous medium) in the presence of a dispersing agent. Sometimes the method which, though based on the coprecipitation method, dispenses with a dispersing agent in precipitating pigment fine particles is referred specifically to as a reprecipitation method in distinction from the coprecipitation method. For details of the reprecipitation method, JP-A-2004-91560 or the like can be referred to. For details of the coprecipitation method, on the other hand, JP-A-2003-026972 or the like can be referred to.

In the producing method of the present invention, it is preferable that a dispersing agent is added to an organic pigment solution and/or an aqueous medium, and organic pigment fine particles are made to form by mixing the solution and the medium. The dispersing agent has functions of (1) adsorbing quickly to the surface of precipitated pigment and forming minute pigment particles and (2) preventing these particles from aggregating again. As the dispersing agent, use can be made of an anionic, cationic, amphoteric, nonionic, pigmentary, low-molecular-weight, or polymer dispersing agent. These dispersing agents may be used alone or in combination. Dispersing agents to be used in dispersion of the pigment are described in detail in "Dispersion Stabilization of Pigment and Surface Treatment Technique/Evaluation" (published by Japan Association for International Chemical Information, on December 2001), pp. 29-46.

Examples of the anionic dispersing agent (anionic surfactant) include N-acyl-N-alkyltaurine salts, fatty acid salts, alkylsulfates, alkylbenzenesulfonates, alkylnaphthalenesulfonates, dialkylsulfosuccinates, alkylphosphates, naphthalenesulfonic acid/formalin condensates, and polyoxyethylenealkylsulfates. N-acyl-N-alkyltaurine salts are particularly preferable. As the N-acyl-N-alkyltaurine salts, those described in JP-A-3-273067 are preferable. These anionic dispersing agents may be used alone or in combination of two or more thereof.

Examples of the cationic dispersing agent (cationic surfactant) include quaternary ammonium salts, alkoxylated polyamines, aliphatic amine polyglycol ethers, aliphatic amines, diamines and polyamines derived from aliphatic amine and aliphatic alcohol, imidazolines derived from aliphatic acid, and salts of these cationic substances. These cationic dispersing agents may be used alone or in combination of two or more thereof.

The amphoteric dispersing agent is a dispersing agent having, in the molecule thereof, an anionic group moiety which the anionic dispersing agent has in the molecule, and a cationic group moiety which the cationic dispersing agent has in the molecule.

Examples of the nonionic dispersing agents (nonionic surfactant) include polyoxyethylenealkyl ethers, polyoxyethylenealkylaryl ethers, polyoxyethylene fatty acid esters, sorbitan fatty acid esters, polyoxyethylenesorbitan fatty acid esters, polyoxyethylenealkylamines, and glycerin fatty acid esters. Among these, polyoxyethylenealkylaryl ethers are preferable. These nonionic dispersing agents may be used alone or in combination of two or more thereof.

The pigmentary dispersing agent is defined as a dispersing agent derived from an organic pigment as a parent material, and prepared by chemically modifying a structure of the parent material. Examples of the pigmentary dispersing agent include sugar-containing pigmentary dispersing agents, piperidyl-containing pigmentary dispersing agents, naphthalene- or perylene-derivative pigmentary dispersing agents, pigmentary dispersing agents having a functional group linked through a methylene group to a pigment parent structure, pigmentary dispersing agents (parent structure) chemically modified with a polymer, pigmentary dispersing agents having a sulfonic acid group, pigmentary dispersing agents having a sulfonamido group, pigmentary dispersing agents having an ether group, and pigmentary dispersing agents having a carboxylic acid group, carboxylic acid ester group or carboxamido group.

Examples of the polymer dispersing agent, in particular, which can be preferably used in the second and third embodiments, include polyvinyl pyrrolidone, polyvinyl alcohol, polyvinyl methyl ether, polyethylene oxide, polyethylene glycol, polypropylene glycol, polyacrylamide, vinyl alcohol/vinyl acetate copolymer, partial-formal products of polyvinyl alcohol, partial-butyral products of polyvinyl alcohol, vinylpyrrolidone/vinyl acetate copolymer, polyethylene oxide/propylene oxide block copolymer, polyacrylic acid salts, polyvinyl sulfuric acid salts, poly(4-vinylpyridine) salts, polyamides, polyallylamine salts, condensed naphthalenesulfonic acid salts, styrene/acrylic acid salt copolymers, styrene/methacrylic acid salt copolymers, acrylic acid ester/acrylic acid salt copolymers, acrylic acid ester/methacrylic acid salt copolymers,

methacrylic acid ester/acrylic acid salt copolymers, methacrylic acid ester/methacrylic acid salt copolymers, styrene/itaconic acid salt copolymers, itaconic acid ester/itaconic acid salt copolymers, vinylnaphthalene/acrylic acid salt copolymers, vinylnaphthalene/methacrylic acid salt copolymers, vinylnaphthalene/itaconic acid salt copolymers, cellulose derivatives, and starch derivatives. Besides, natural polymers can be used, examples of which include alginic acid salts, gelatin, albumin, casein, gum arabic, tragacanth gum, and ligninsulfonic acid salts. Polyvinyl pyrrolidone is particularly preferable. These polymer dispersing agents may be used alone or in combination of two or more thereof.

Examples of a preferred embodiment of the present invention include an embodiment, in which the anionic dispersing agent and the polymer dispersing agent are incorporated in the solution in which the organic pigment is dissolved, and an embodiment, in which the anionic dispersing agent is incorporated in the aqueous medium, and the nonionic dispersing agent and/or the polymer dispersing agent are(is) incorporated in the solution in which the organic pigment is dissolved.

In the present invention, the amount of the dispersing agent to be blended is preferably from 0.1 to 1,000 parts by mass, more preferably from 1 to 500 parts by mass, and further preferably from 10 to 250 parts by mass, to 100 parts by mass of the pigment, to further improve the uniform dispersibility and storage stability of the pigment. If the amount of the dispersing agent to be added is too small, the dispersion stability of the organic pigment fine particles may not be improved, in some cases.

The particle diameter (in the present invention, the particle diameter refers to a diameter of a particle) and monodispersibility of the organic pigment fine particles contained by the dispersion produced by the production method of the present invention are not particularly limited, but the average particle diameter is preferably nanometer-size (less than 1 $\mu$m), and the volume average particle diameter (Mv) measured in the dispersion containing the pigment fine particles by a dynamic light scattering method is more preferably 80 nm or less, furthermore preferably 50 nm or less. As to the monodispersibility, a value (Mv/Mn) obtained by dividing a volume average particle diameter Mv by a number average particle diameter Mn may be expressed as an index. The value Mv/Mn is preferably 1.8 or less, and more preferably 1.5 or less.

In the present invention, gases such as air and oxygen may be present in the course of precipitating the pigment fine particles, and they can be used, e.g., as oxidizing agents. The mode of bringing such gases into presence is not particularly limited, so that the gases may be dissolved in advance in an organic pigment solution and/or aqueous medium, or they may be introduced separately from both the liquids and brought into contact with these liquids.

It is preferred that the organic pigment fine particles contained in the dispersion of the present invention are formed by using a microreactor-apparatus. As preferred embodiments, there are (i) an embodiment, in which an equivalent diameter of the microreactor-apparatus is 1mm or less (preferably 0.01 to 0.5 mm), and (ii) an embodiment, in which a laminar flow is formed by the microreactor-apparatus. The particle formation performed under a laminar flow is preferable. This is because the process from nucleation to nuclear growth can be stabilized and a turbidity-free pigment dispersion minute in particle size and narrow in particle size distribution can be obtained with efficiency. The dispersion produced by precipitating pigment fine particles in the course of the laminar flow in particular, and what's more, while changing the pH as mentioned above is especially preferable because it is superior in particle size, its distribution, dispersion stability and productivity.

The equivalent diameter is a term also called a corresponding diameter, which is used in mechanical engineering field. If a cylindrical pipe equivalent to the pipe (channel in the present invention) having any sectional shape is assumed, the diameter of the equivalent cylindrical pipe corresponds to the equivalent diameter. The equivalent diameter ($d_{eq}$) is defined as $d_{eq}=4A/p$ in which A is a sectional area of the pipe, and p is a wetted perimeter length (circumferential length) of the pipe. In the case of the cylindrical pipe, this equivalent diameter corresponds to the diameter of the cylindrical pipe. The equivalent diameter is used for presuming fluidity or heat conducting characteristic of the pipe on the basis of data of the equivalent cylindrical pipe, and expresses a spatial scale (a representative length) of a phenomenon. The equivalent diameter is: $d_{eq}=4a^2/4a=a$ in a squared pipe having a side (a); $d_{eq}=a/\sqrt{3}$ in an equilateral triangular pipe having a side (a); and $d_{eq}=2h$ in a flow between paralleled plates having a channel height (h) (see, for example, edited by Nippon Kikai Gakkai, "Kikai Kougaku Jiten," 1997, published by Maruzen, K. K.).

When causing water to flow into a pipe, inserting a narrow pipe into the pipe along the central axis thereof and then injecting a colored solution into the water, the colored solution flows in the form of a single line while the flow velocity of the water is small or slow. Thus, the water flows straightly and in parallel to the wall of the pipe. However, when the flow velocity is raised to reach a given flow velocity, turbulence is suddenly caused in the water flow. Consequently, the colored solution is mixed with the water flow so that the whole of the solution and water becomes a colored flow. The former flow is called laminar flow, and the latter flow is called turbulent flow.

Whether a flow turns to a laminar flow or turbulent flow depends on whether or not the Reynolds number, which is a dimensionless number showing the state of the flow, is not more than a given critical value. As the Reynolds number is smaller, a laminar flow is more apt to be caused. The Reynolds number Re of the flow in a pipe is represented by the following equation:

$$Re = D\langle \nu_x \rangle \rho / \mu$$

wherein D represents the equivalent diameter of the pipe, $\langle \nu_x \rangle$ represents the sectional average velocity, $\rho$ represents the density of the flow, and $\mu$ represents the viscosity of the flow. As can be understood from this equation, the Reynolds number is smaller as the equivalent diameter is smaller. Therefore, in the case that the equivalent diameter is in the order of $\mu$m, a stable laminar flow is apt to be formed. In addition, because the physical properties of the solution, such as the density and the viscosity thereof, also have influence on the Reynolds number. As the density is smaller and/or the viscosity is larger, the Reynolds number is smaller. It can be, therefore, understood that a laminar flow is apt to be formed in that case.

The Reynolds number representing such a critical value is called "critical Reynolds number". The critical Reynolds number is not necessarily definite. However, roughly, the following values can be criteria:

| | |
|---|---|
| Re<2,300 | laminar flow; |
| Re>3,000 | turbulent flow; and |
| 3,000≥Re≥2,300 | transition state. |

When pigment fine particles are produced, the flow velocity (flow rate) of the fluid which flows in the channel is preferably from 0.1 mL/hour to 300 L/hour, more preferably from 0.2 mL/hour to 30 L/hour, further preferably from 0.5 mL/hour to 15 L/hour, and particularly preferably from 1 mL/hour to 6 L/hour.

As the equivalent diameter of a channel is smaller, the surface area per unit volume (specific surface area) thereof is larger. When the channel turns into a micro-scale, the specific surface area becomes remarkably large so that the conduction efficiency of heat through the wall of the channel becomes very high. Since the heat conduction time (t) of a fluid flowing in the channel is represented by: $t=d_{eq}^2/\alpha$, (in which $\alpha$ is the heat diffusion rate of the fluid), the heat conduction time becomes shorter as the equivalent diameter becomes smaller. That is, if the equivalent diameter becomes 1/10, the heat conduction time becomes 1/100. Thus, when the equivalent diameter is in a micro-scale, the heat conduction speed is very high.

Specifically, a mixing space that has an equivalent diameter of micrometer size and includes a rectifiable channel is provided for a micro-reactor. By feeding two or more liquids into the channel in the same longitudinal direction and passing them through it, the liquids can be brought into contact with one another and mixed together. For details of the micro-reactor, W. Ehrfeld, V. Hessel & H. Loewe, "Microreactor", 1 st Ed. (2000) Wiley-VCH, for example, can be referred to.

When a micro-reactor is used, the temperature and reaction time between the solutions therein can be more precisely controlled, different from a conventional batch system, in which, for example, a tank having a large volume is used as a reaction site, and a jet reactor in which liquid droplets are sprayed and made to collide with one another in a current of air (see, for example, U.S. Patent No. 6,537,364).

Further, in the batch system, in particular, between solutions having a large reaction speed, sometimes reaction advances on a reaction contact face generated at the initial stage of mixing the solutions, and further a primary product generated by the reaction between the solutions subsequently undergoes reaction in the container. Therefore, there is a possibility that the resultant product becomes non-homogeneous or crystals of the product grow beyond necessity in the mixing container (batch) to get coarse. Contrary to the above, according to a micro-reactor solutions hardly remain in the mixing space (e.g. a mixing container) so as to flow continuously. Consequently, it is possible to restrain a primary product generated by the reaction between the solutions from undergoing subsequent reaction while the primary product remains in the mixing space. Thus, a pure primary product, which has been hardly taken out hitherto, can be taken out. Moreover, it advantageously becomes difficult that crystals aggregate in the mixing space or get coarse.

Speaking of the scale-up, there may be cases where properties of a chemical substance experimentally produced in only a small amount cannot be reproduced so long as a batch system is adopted when the substance is produced in large quantities with large-scale production facilities. Such an inconvenience can be resolved by use of micro-reactors. More specifically, the producing lines which use micro-reactors increased in number (numbering-up) according to the production volume required are arranged in parallel, and thereby it can have advantages that the result obtained by one micro-reactor can be reproduced without any impairment and mass production can be attained with high efficiency and high accuracy.

The micro-reactors may be made by use of a general method and materials. A fluid control method is classified into a continuous flow system and a droplet (liquid plug) system according to the formation, while it is also classified into an electric driving system and a pressure driving system according to the driving force.

In the present invention, it is preferred to employ the continuous flow system. When the flow is controlled in the continuous flow system, the entire portion inside the micro-channel can be preferably filled with a fluid. And, it is

preferred to drive the fluid as a whole by a pressure source such as a syringe pump that is provided outside the channel (a pressure driving system). In this method, although dead volume is large, the continuous flow system has such a great merit that the control system can be realized with a relatively simple set-up.

As to producing methods and control methods of micro-reactors, JP-A-2005-307154, paragraphs [0035] to [0046], for example, can be referred to..

In the present invention, the length of a micro-reactor's liquid-mixing space with micro-channels (the length of the channel) is not particularly limited, but it is preferably 1 mm or more but 10 m or less, more preferably 5 mm or more but 10 m or less and particularly preferably 10 mm or more but 5 m or less.

In the present invention, the number of channels may be any number appropriately provided with a reactor. Many channels may be used in parallel (i.e. numbering-up) as needed, to increase a production amount of the pigment fine particle dispersion.

Fig. 1 is an exploded perspective view showing an example of a three-dimensional microreactor 100 under the condition that three parts constituting the microreactor 100 are decomposed. The three-dimensional microreactor 100 is mainly composed of a supply block 11, a combination block 12, and a reaction block 13, each having a cylindrical shape. For assembling the microreactor 100, the side faces of the blocks 11, 12, 13 having a cylindrical shape are attached to each other in this order to form a cylinder, and in this state, the respective blocks 11, 12, 13 are fastened integrally with a boltnut, etc.

On a side face 14 of the supply block 11 opposed to the combination block 12, two annular grooves 15, 16 are formed concentrically, and in the assembled state of the microreactor 100, two annular grooves 16, 15 form ring-shaped flow paths through which the solutions B and A flow respectively. Then, through-holes 18, 17 are respectively formed so as to reach the outside annular groove 16 and the inside annular groove 15 from a side face 24 of the supply block 11 not opposed to the combination block 12. Among two through-holes 18, 17, supply means (a pump, a connecting tube, etc.) for supplying the solution A is connected to the through-hole 18 communicated with the outside annular groove 16, and supply means (a pump, a connecting tube, etc.) for supplying the solution B is connected to the through-hole 17 communicated with the inside annular groove 15. In Fig. 1, although the solution A is allowed to flow through the outside annular groove 16, and the solution B is allowed to flow through the inside annular groove 15, they may be opposite.

At a center of a side face 19 of the combination block 12 opposed to the reaction block 13, a circular combination region 20 (combination hole 20) is formed, and four long radial grooves 21 and four short radial grooves 22 are formed alternately in a radial manner from the combination region 20. In the assembled state of the microreactor 100, the combination hole 20 and the radial grooves 21, 22 form a circular space to be a combination region 20 and radial flow paths through which the solutions A, B flow. Further, through-holes 25, are respectively formed in a thickness direction of the combination block 12 from the tip ends of the long radial grooves 21 among eight radial grooves 21, 22, and these through-holes 25 are communicated with the above-mentioned outside annular groove 16 formed in the supply block 11. Similarly, through-holes 26, are respective formed in a thickness direction of the combination block 12 from the tip ends of the short radial grooves 22, and the through-holes 26 are communicated with the inside annular groove 15 formed in the supply block 11.

Further, at a center of the reaction block 13, one through-hole 23 communicated with the combination hole 20 is formed in a thickness direction of the reaction block 13, and the through-hole 23 becomes a micro-flow path.

Because of this, the solution A flows through a supply flow path composed of the through-hole of the supply block 11, the outside annular groove 16, the through-holes 25 of the combination block 12, and the long radial grooves 21, and divided into four divided flows to reach the combination region 20 (combination hole 20). On the other hand, the solution B flows through a supply flow path composed of the through-hole 17 of the supply block 11, the inside annular groove 15, the through-holes 26 of the combination block 12, and the short radial grooves 22, and divided into four divided flows to reach the combination region 20 (combination hole 20). In the combination region 20, the divided flow of the solution A and the divided flow of the solution B are combined with having the respective kinetic energy, and thereafter, flows in the micro-flow path with the flow direction changed by 90°.

In addition, a reactor having a Y-shaped channel, a reactor having a cylinder-shaped channel, and these reactors to which a modification is made so that, when flows of two liquids reach the exit in a state of laminar flow, separation between them is achieved can be utilized (see, e.g., JP-A-2005-307154, paragraphs [0049] to [0052] and Figs. 1 to 4). Moreover, it is also preferable to use a two-dimensional microreactor and a three-dimensional microreactor in which the angle of contact between two liquids and the number of contact flow paths are appropriately controlled (see, e.g., Japanese Patent Application No. 2006-78637, paragraphs [0044] to [0050]).

Preferred embodiments of the present invention are as follows:

At the time of mixing the organic pigment solution and the aqueous medium, at least one of the flows of two liquids (the organic pigment solution and the aqueous medium) is divided into plural flows, and the two liquids are mixed by joining the flows so that a central axis of at least one of the plural divided flows and a central axis of the flow of the other liquid (i.e. the organic pigment solution when the aqueous medium is divided or the aqueous medium when the organic pigment solution is divided) intersect at one point in a junction region. In this embodiment, it is preferred that

both of the flows of the organic pigment solution and the aqueous solution are divided into plural flows. This process is preferably performed using a micro-reactor having plural channels for supplying a solution, for example, a micro-reactor as illustrated in Fig. 1 or the like.

Further, it is a preferred embodiment of the present invention that the mixing of the organic pigment solution and the aqueous medium is achieved by allowing the divided flows to flow through channels radially extending from a center of the junction region, toward the center of the junction region, to be joined at the region. This process is preferably performed using a micro-reactor as illustrated in Fig. 1 or the like.

In another preferred embodiment of the present invention, a continuous flow system is employed to control the liquid flow. The continuous flow system is a system wherein the channel is entirely filled with the liquids. In this embodiment, it is preferred that the liquids as a whole is driven by a pressure.

The organic pigment fine particles of the present invention have sizes of nanometers, show a sharp size-distribution peak (high monodispersibility), and retain high lightfastness. In other words, the present organic pigment fine particles are able to achieve compatibility between those mutually contradictory properties that pigment particles rendered finer have had so far.

According to the producing method of the present invention, a dispersion of the organic pigment fine particles having the aforesaid excellent properties can be produced with efficiency and at a high purity, and besides, it can be produced in large quantity by scale-up when required.

Furthermore, the organic pigment fine particles having the foregoing excellent properties and a dispersion thereof can be used suitably for color filters and ink-jet inks, and can produce excellent effects of achieving enhancement of image quality when used in apparatus associated with imaging and preventing discoloration even in the case of long-term use.

EXAMPLES

The present invention will be described in more detail based on the following examples, but the present invention is not limited thereto.

(Example 1)

In 60 mL of dimethyl sulfoxide, 4.0 g of Pigment Yellow 128 (CROMOPHTAL YELLOW 8GNP, manufactured by Ciba Specialty Chemicals), 0.8 g of Compound (2-3) [4-acetoamido-TEMPO, free radical (trade name, 20 mass% based on pigment, manufactured by Wako Chemical, Ltd.)], 3.7 g of a 28% methanol solution of sodium methoxide (manufactured by Wako Pure Chemical Industries, Ltd.), 3.2 g of AQUARON KH-10 (trade name, manufactured by Dai-ichi Kogyo Seiyaku Co., Ltd.), 0.8 g of N-vinylpyrrolidone (a product of Wako Pure Chemical Industries, Ltd., which was used after purification by reduced-pressure distillation) and 0.4 g of polyvinyl pyrrolidone K-30 (trade name, manufactured by Tokyo Chemical Industry Co., Ltd.) were dissolved at room temperature(23°C). The thus prepared solution was symbolized by IE liquid. And distilled water was symbolized by IIE liquid. As a microreactor-apparatus, the three-dimensional microreactor-apparatus shown in Fig. 1 which had the following division number (the number of flow paths) was used.

- Number of supply flow paths ... Two kinds of reaction liquids were each divided into 5 flow paths (A total of 10 flow paths were joined together. Incidentally, the apparatus shown in Fig. 1 is designed so that a total of 8 flow paths, four flow paths for each liquid, join together.)
- Width (W) of supply flow paths 21 and 22 ··· Each 400 μm
- Depth (H) of supply flow paths 21 and 22 ... Each 400 μm
- Diameter (D) of combination region 20 ··· 800 μm
- Diameter (R) of micro-flow path 23 ... 800 μm
- Length (L) of micro-flow path 23 ... 10 mm
- Crossing angle between central axes of each supply flow path 21 or 22 and a micro-flow path 23 in the combination region 20 ... 90°
- Material of apparatus ... Stainless steel (SUS304)
- Channel machining method ··· Electric spark micromachining was performed. Sealing of three parts, a supply block 11, a combination block 12 and a reaction block 13, was carried out by mirror-finished metallic surface sealing. Two Teflon (trade mark) tubes each having a length of 50 cm and an equivalent diameter of 1 mm were tied to two entrances by means of connectors, respectively, and to the ends thereof syringes filled respectively with IE liquid and IIE liquid were fastened. And these syringes were set in a pump. To the exit of each connector was joined a Teflon™ tube having a length of 1.5 m and an equivalent diameter of 2 mm.

IE liquid was sent out at a feed speed of 150 mL/min, and IIE liquid at a feed speed of 600 mL/min. A dispersion liquid of Pigment Yellow 128 obtained from the exit end of the tube was collected, and it was named Sample 1a. Sample 1a was obtained in an amount of 300 g. The volume average diameter (Mv) of pigment particles in Sample 1a was found to be 28.1 nm, and the volume average particle diameter Mv/number average particle diameter Mn ratio, which was adopted as an index of monodispersibility, was found to be 1.55 (Herein, the volume average particle diameter (Mv) and the monodispersibility (Mv/Mn) of pigment particles were determined with MICROTRACK UPA150, made by Nikkiso Co., Ltd. Likewise, these factors were determined in the following Examples and Comparative Examples, too.).

The liquid of Sample 1a thus obtained was subjected to deaeration treatment through bubbling of nitrogen gas, and thereto 0.64 g of V-50 [2,2'-azobis-(2-amidinopropane) dihydrochloride, manufactured by Wako Pure Chemical Industries, Ltd.] was added under an atmosphere of nitrogen and heated at 80°C for 5 hours. The resulting liquid was cooled to room temperature, and then filtered through filter paper (No. 2, manufactured by Advantec Toyo Kabushiki Kaisha) to prepare Sample 1b. The volume average particle diameter Mv of Sample 1b was found to be 27.3 nm and the volume average particle diameter Mv/number average particle diameter Mn ratio, or the index of monodispersibility, of Sample 1 b was found to be 1.54.

Sample 1b was further purified with an ultrafiltration device (UHP-62K, made by Advantec Toyo Kabusiki Kaisha, molecular weight cut off: $5\times10^4$) as it was kept at a constant volume by displacement of the filtrate by distilled water, and then concentrated until the pigment content reached 5.0 mass%. The viscosity of the dispersion liquid having the pigment content of 5.0 mass% was found to be 4.8 mPas. Subsequently to the concentration, the dispersion liquid was stored for 100 hours as a first step and 240 hours as a second step under heating at 60°C. The viscosities after storage at the first and second steps were both 4.8 mPas, and no change in viscosity was detected.

(Inclusion Verification)

A 40 g portion of Sample 1b was subjected to aqueous cleaning by use of an ultrafiltration device (UHP-62K, made by Advantec Toyo Kabusiki Kaisha, molecular weight cut off: $5\times10^4$) as it was kept at a constant volume by displacement of the filtrate by distilled water, and the amount of Compound (2-3) washed out was evaluated.

The amount of Compound (2-3) used in this example was 0.8 g, and Sample 1a obtained was 330 g. Therefore, the amount of Compound (2-3) in 40 g of Sample 1b was 0.8 g × 40/330 = 97 mg at a rough estimate. The cleaning liquid in constant-volume cleaning by ultrafiltration was batched off in five 40 ML portions, and the quantity of Compound (2-3) contained in each portion was determined by HPLC. The quantities determined were 36.9 mg, 13.6 mg, 5.0 mg, 1.8 mg and 0.8 mg. The sum total of these values is approximately 58 mg, which indicates that 60% (58 mg/97 mg) of the compound was washed out. In other words, it can be estimated that about 40% of Compound (2-3) added, or about 8 parts by mass based on the pigment, was included in the pigment.

(Light Stability Evaluation)

To an aqueous dispersion having a pigment concentration of 5.0 mass% obtained by concentration of Sample 1b, polyvinyl alcohol (Polyvinyl Alcohol 500, trade name, manufactured by Kanto Chemical Co., Inc.), glycerin and distilled water were added so that the contents of pigment, polyvinyl alcohol and glycerin were adjusted to 2.0 mass%, 4.0 mass% and 10 mass%, respectively. The resulting dispersion liquid was spin-coated at 5,000 rpm on a glass plate having a size of 1 cm × 1 cm, thereby preparing Sample 1c.

Sample 1c was set in a fadeometer, and subjected to a light stability test by 4-day irradiation with a xenon lamp under illuminance of 170,000 lux. A UV filter, TEMPAX Filter (a product of Eagle Engineering Inc., material: TENPAX Glass made by Schott AG), was placed between the light source and the sample. The absorbance (Abs.) before the irradiation, the absorbance after the irradiation and the residual absorbance rate [(absorbance after irradiation/absorbance before irradiation)×100] were found to be 0.308, 0.277 and 90%, respectively.

(Comparative Example 1)

A 5% dispersion liquid R1b and a spin-coated Sample R1c were made in the same manners as in Example 1, except that Compound (2-3) was not used. And Sample R1c was examined for absorbance values before and after the xenon irradiation test and a residual absorbance rate in accordance with the same method as in Example 1. Results obtained are shown in Table 1.

(Reference Example 1)

A dispersion liquid S1b containing 5 mass% of the pigment was prepared in the same manner as Sample 1b of Example 1, except that Compound (2-3) used in Example 1 was not added to IE liquid. To the dispersion liquid S1b

in an amount of 24 ml, a solution containing 0.24 g (20 mass% based on the pigment) of Compound (2-3) in 2.4 ml of THF was added, and stirred for 2 hours at room temperature. The resulting dispersion liquid was filtered through filter paper (No. 2, manufactured by Advantec Toyo Kabushiki Kaisha). The filtrate obtained was adjusted to have a pigment concentration of 2.0 mass% in the same manner as in Example 1 (Likewise, it was adjusted to have a polyvinyl alcohol concentration of 4.0 mass% and a glycerin concentration of 10 mass%). Then, the resulting liquid was spin-coated on a glass substrate under the same condition as in Example 1, thereby preparing Sample S1c. And the light stability test was carried out on Sample S1c. Therein, absorbance values of Sample S1c before and after the xenon irradiation test were measured and the residual absorbance rate was calculated. Results obtained are shown in Table 1.

(Examples 2 to 4, and Reference Example 2)

Pigment-dispersed liquids and coatings on glass substrates were prepared in the same manners as in Example 1, except that Compound (2-3) used in Example 1 was replaced with the same mass of compounds shown in Table 1, respectively. As to the addition mode of each compound represented by formula (1) or (2), the mode of adding each compound to IE liquid as in the case of Example 1 is described as "addition to I liquid", and the mode of adding each compound after precipitation of pigment fine particles as in the case of Reference Example 1 is described as "after addition". The coatings formed on the glass substrates in the same manner as in Example 1 (or Reference Example 1) were each examined for absorbance values before and after the xenon irradiation test and a residual absorbance rate in accordance with the same method as in Example 1. Results obtained are shown in Table 1.

Table 1

| | Additive* | Addition mode | Name of sample coated on a glass | Light stability (Absorbance) | | |
|---|---|---|---|---|---|---|
| | | | | Before irradiation | After 4-days irradiation | Residual rate (%) |
| Example 1 | 2-3 | Addition to I liquid | 1c | 0.308 | 0.277 | 90 |
| Comparative Example 1 | None | - | R1c | 0.313 | 0.182 | 58 |
| Reference Example 1 | 2-3 | After addition | S1c | 0.310 | 0.236 | 76 |
| Example 2 | 1-1 | Addition to I liquid | 2c | 0.321 | 0.254 | 79 |
| Reference Example 2 | 1-1 | After addition | S2c | 0.315 | 0.202 | 64 |
| Example 3 | 2-5 | Addition to I liquid | 3c | 0.307 | 0.261 | 85 |
| Example 4 | 1-3 | Addition to I liquid | 4c | 0.318 | 0.248 | 78 |
| *Number of exemplified compounds of the compound represented by formula (1) or (2) | | | | | | |

Incorporation of a compound represented by formula (1) or (2) into a dispersion allowed pigment particles in the dispersion, even in a finely divided state, to retain high lightfastness and gain high light stability (Examples 1 to 4 and Reference Examples 1 and 2) in contrast to the case where the foregoing compound was not used (Comparative Example 1)

Furthermore, the pigment fine particles which were produced in accordance with the method of adding a compound represented by formula (1) or (2) to IE liquid, and in which the compound was included effectively (Examples 1 to 4) produced more remarkable lightfastness increasing effect than the particles in which the compound was included by the method of adding the compound after precipitation of fine particles (Reference Examples 1 and 2)

It can be seen from these result that, in accordance with the present invention, organic pigment fine particles can be produced with efficiency, the problems associated with fining-down of pigment particles can be resolved, and the pigment particles produced can have nanometer sizes, a monodisperse size distribution, and high lightfastness besides.

Having described our invention as related to the present embodiments, it is our intention that the invention not be limited by any of the details of the description, unless otherwise specified, but rather be construed broadly within its spirit and scope as set out in the accompanying claims.

## Claims

1. Organic pigment fine particles, wherein at least one compound selected from an aromatic compound represented by the following formula (1) and an amine compound represented by the following formula (2) is included in the fine particles.

Formula (1)

[In the above formula, $R^1$ represents a hydrogen atom or an alkyl group. $X^1$ to $X^5$ each represent a hydrogen atom or an arbitrary substituent independently. Herein, however, the case where both $X^1$ and $X^2$ are hydrogen atoms is excluded. $R^1$ and any of $X^1$ to $X^5$ may combine with each other to from a ring.]

Formula (2)

[In the above formula, $Y^1$ represents a hydrogen atom, an alkyl group, a hydroxyl group, an alkoxy group, an acyloxy group or an oxygen atom. $Z^1$ and $Z^2$ each represent an alkyl group independently. Any two of $Y^1$, $Z^1$ and $Z^2$ may combine with each other to form a ring.]

2. The organic pigment fine particles according to claim 1, wherein at least one of the amine compound represented by the formula (2) is included in the fine particles.

3. The organic pigment fine particles according to claim 1 or 2, wherein the $Y^1$ in the amine compound represented by the formula (2) is a hydrogen atom, an oxygen atom or a hydroxyl group.

4. The organic pigment fine particles according to any one of claims 1 to 3, wherein the amine compound represented by the formula (2) is a compound represented by the following formula (3).

Formula (3)

[In the above formula, $Y^2$ represents a hydrogen atom, a hydroxyl group or an oxygen atom. $R^2$ and $R^3$ each represent a hydrogen atom or a substituent independently. $R^2$ and $R^3$ may combine with each other to form a ring.]

5. The organic pigment fine particles according to any one of claims 1 to 4, wherein at least one compound selected from the aromatic compound represented by the formula (1) and the amine compound represented by the formula (2) is incorporated in an amount of 0.1 parts by mass or more into 100 parts by mass of the organic pigment fine particles.

6. The organic pigment fine particles according to any one of claims 1 to 5, having a volume average particle diameter (Mv) of 80 nm or less.

7. The organic pigment fine particles according to any one of claims 1 to 6, having a volume average particle diameter (Mv) of 50 nm or less.

8. The organic pigment fine particles according to any one of claims 1 to 7, havig a volume average particle diameter (Mv)-to-number average particle diameter (Mn) ratio (Mv/Mn) of 1.8 or less.

9. The organic pigment fine particles according to any one of claims 1 to 8, being produced by a build-up method.

10. A dispersion, comprising the organic pigment fine particles according to any one of claims 1 to 9.

11. A method of producing an organic pigment fine particle dispersion, comprising the step of: when organic pigment fine particles are made to precipitate by mixing an organic pigment solution and an aqueous medium,
mixing at least one compound selected from an aromatic compound represented by the following formula (1) and an amine compound represented by the following formula (2) into at least one of the organic pigment solution and the aqueous medium to thereby precipitate organic pigment fine particles and prepare the organic pigment fine particle dispersion.

Formula (1)

OR1
X1 X2
X3 X5
X4

[In the above formula, $R^1$ represents a hydrogen atom or an alkyl group. $X^1$ to $X^5$ each represent a hydrogen atom or an arbitrary substituent independently. Herein, however, the case where both $X^1$ and $X^2$ are hydrogen atoms is excluded. $R^1$ and any of $X^1$ to $X^5$ may combine with each other to from a ring.]

Formula (2)

Y1
N
Z1 Z2

[In the above formula, $Y^1$ represents a hydrogen atom, an alkyl group, a hydroxyl group, an alkoxy group, an acyloxy group or an oxygen atom. $Z^1$ and $Z^2$ each represent an alkyl group independently. Any two of $Y^1$, $Z^1$ and $Z^2$ may combine with each other to form a ring.]

12. The method of producing an organic pigment fine particle dispersion according to claim 11, wherein at least one of the amine compound represented by the formula (2) is mixed into at least one of the organic pigment solution and

the aqueous medium.

**13.** The method of producing an organic pigment fine particle dispersion according to claim 11 or 12, wherein the $Y^1$ in the amine compound represented by the formula (2) is a hydrogen atom, an oxygen atom or a hydroxyl group.

**14.** The method of producing an organic pigment fine particle dispersion according to any one of claims 11 to 13, wherein the amine compound represented by the formula (2) is a compound represented by the following formula (3).

Formula (3)

[In the above formula, $Y^2$ represents a hydrogen atom, a hydroxyl group or an oxygen atom. $R^2$ and $R^3$ each represent a hydrogen atom or a substituent independently. Alternatively, $R^2$ and $R^3$ may combine with each other to form a ring.]

**15.** The method of producing an organic pigment fine particle dispersion according to any one of claims 11 to 14, further incorporating a dispersing agent into at least one of the organic pigment solution and the aqueous medium.

**16.** The method of producing an organic pigment fine particle dispersion according to any one of claims 11 to 15, wherein the organic pigment solution is prepared by dissolving an organic pigment by use of an alkali.

**17.** The method of producing an organic pigment fine particle dispersion according to any one of claims 11 to 16, wherein at least one compound selected from the aromatic compound represented by the formula (1) and the amine compounds represented by the formula (2) is mixed into the organic pigment solution.

**18.** The method of producing an organic pigment fine particle dispersion according to any one of claims 11 to 17, wherein the precipitation of the organic pigment fine particles is performed with a microreactor-apparatus.

**19.** The method of producing an organic pigment fine particle dispersion according to claim 18, wherein the microreactor-apparatus has flow paths whose equivalent diameters are each adjusted to 1 mm or less.

**20.** The method of producing an organic pigment fine particle dispersion according to any one of claims 11 to 19, wherein the precipitation of the organic pigment fine particles is performed in a laminar flow process.

**21.** The method of producing an organic pigment fine particle dispersion according to any one of claims 11 to 20, further comprising the steps of:

dividing at least one of liquid flows of the organic pigment solution and the aqueous medium, into plural divided flows, and
joining at least one of the plural divided flows with the other liquid flow in the manner that central axes of said flows intersect at one point in a junction region so as to mix the organic pigment solution and the aqueous medium.

FIG. 1

100
17 11
16
15
B
12
25
24
25
26
21
22
26
13
21
22
22
A
26
22
18
14
22
25
19
21
26
20
25
21
23
C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1516896 A1
- JP 2005307154 A
- JP 6166827 A
- JP 9052975 A
- JP 2004091560 A
- JP 2003026972 A
- JP 3273067 A
- US 6537364 B
- JP 2006078637 A


### Non-patent literature cited in the description


- Dispersion Stabilization of Pigment and Surface Treatment Technique/Evaluation. Technical Information Institute Co., Ltd, 2001, 123-224
- Experimental Chemical Lecture. Maruzen Co., Ltd, vol. 12, 411-488
- Dispersion Stabilization of Pigment and Surface Treatment Technique/Evaluation. Japan Association for International Chemical Information, December 2001, 29-46
- **W. EHRFELD ; V. HESSEL ; H. LOEWE.** Microreactor. Wiley-VCH, 2000